(19) Europäisches Patentamt
European Patent Office
Office européen des brevets

(11) **EP 3 543 028 A2**

(12) **EUROPEAN PATENT APPLICATION**

(43) Date of publication:
**25.09.2019   Bulletin 2019/39**

(51) Int Cl.:
***B41M 3/00*** *(2006.01)*          ***B41M 3/06*** *(2006.01)*
***C09D 11/037*** *(2014.01)*      ***C09D 11/322*** *(2014.01)*
***B41M 3/16*** *(2006.01)*

(21) Application number: **19163244.7**

(22) Date of filing: **15.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.03.2018   JP 2018055059**

(71) Applicant: **Casio Computer Co., Ltd.
Tokyo 151-8543 (JP)**

(72) Inventors:
• **TAKAHASHI, Hideki
  Tokyo 205-8555 (JP)**
• **HORIUCHI, Yuji
  Tokyo 205-8555 (JP)**
• **MOTOYANAGI, Yoshimune
  Tokyo 205-8555 (JP)**
• **MITSUI, Satoshi
  Tokyo 205-8555 (JP)**

(74) Representative: **Plougmann Vingtoft a/s
Strandvejen 70
2900 Hellerup (DK)**

(54) **INK, THERMALLY-EXPANDABLE SHEET, AND MANUFACTURING METHOD FOR SHAPED OBJECT**

(57)     An ink (10) is used for forming a photothermal conversion layer (41, 43) used for causing expansion of at least a portion of a thermal expansion layer (22) of a thermally-expandable sheet (20). The ink (10) includes an inorganic infrared absorbing agent having a higher absorptivity in at least one region of an infrared light spectrum than in a visible light spectrum. A base of the ink (10) is white.

EP 3 543 028 A2

**Description**

This application relates generally to an ink, and more particularly to an ink for forming a photothermal conversion layer for causing a part or all of a thermally-expandable sheet, which foams and swells in accordance with the amount of absorbed heat, to swell, a thermally-expandable sheet using the ink, and a manufacturing method for a shaped object.

In the related art, there are thermally-expandable sheets obtained by forming a thermal expansion layer including a thermally expandable material on one surface of a base sheet. This thermally expandable material foams and swells in accordance with the amount of absorbed heat. By forming a photothermal conversion layer that converts light to heat on the thermally-expandable sheet and irradiating the photothermal conversion layer with light, part or all of the thermal expansion layer can be made to swell. Additionally, methods are known in the related art for forming a pseudo-three-dimensional shaped object on a thermally-expandable sheet by changing the shape of the photothermal conversion layer (see, for example, Unexamined Japanese Patent Application Kokai Publication No. S64-28660 and Unexamined Japanese Patent Application Kokai Publication No. 2001-150812).

Photothermal conversion layers are typically formed using black ink containing carbon. However, in some cases, the black ink used to print the photothermal conversion layer affects the color of the resulting shaped object. For example, when the photothermal conversion layer is formed on the surface of a thermally-expandable sheet and a color image is then printed on the photothermal conversion layer using color ink, the color image may be dulled by the black ink of the photothermal conversion layer. Moreover, the color of the photothermal conversion layer appears as-is in the region of the surface of the thermally-expandable sheet where the photothermal conversion layer is to be formed and swelling is intended occur.

Therefore there is a need for a photothermal conversion layer capable of reducing the effects of the photothermal conversion layer on the color of the shaped object.

An aspect of the present disclosure is an ink for forming a photothermal conversion layer used for causing expansion of at least a portion of a thermal expansion layer of a thermally-expandable sheet. The ink includes an inorganic infrared absorbing agent having a higher absorptivity in at least one region of an infrared light spectrum than in a visible light spectrum. A base of the ink is white.

Another aspect of the present disclosure is a manufacturing method for manufacturing a shaped object by using a photothermal conversion layer for causing expansion of at least a portion of a thermal expansion layer of a thermally-expandable sheet. The manufacturing method includes: forming the photothermal conversion layer using an ink on at least one surface of the thermally-expandable sheet, the ink including an inorganic infrared absorbing agent having a higher absorptivity in at least one region of an infrared light spectrum than in a visible light spectrum, a base of the ink being white; and irradiating the photothermal conversion layer with light to cause expansion of the thermally-expandable sheet.

Another aspect of the present disclosure is a thermally-expandable sheet that includes a thermal expansion layer that distends due to heat, and

a photothermal conversion layer disposed on at least one surface of the thermally-expandable sheet, the photothermal conversion layer for causing the thermal expansion layer to distend. The photothermal conversion layer includes an ink including an inorganic infrared absorbing agent having a higher absorptivity in at least one region of an infrared light spectrum than in a visible light spectrum. A base of the ink is white.

A more complete understanding of this application can be obtained when the following detailed description is considered in conjunction with the following drawings, in which:

FIG. 1 is a drawing illustrating distributions of transmittance of various materials, a sunlight intensity spectrum, and a halogen lamp intensity spectrum;

FIG. 2 is a graph depicting the products of multiplying the absorptivity of cesium tungsten oxide or the absorptivity of $LaB_6$ by the radiation energy (%) from the halogen lamp at various wavelengths;

FIG. 3 is a cross-sectional view schematically illustrating a thermally-expandable sheet according to an embodiment;

FIG. 4 is a cross-sectional view illustrating a thermally-expandable sheet provided with an ink layer;

FIG. 5A is a front view of a shaped object manufacturing system;

FIG. 5B is a plan view of the shaped object manufacturing system;

FIG. 5C is a plan view of the shaped object manufacturing system with a top panel open;

FIG. 6 schematically illustrates a printing unit provided with the ink according to the embodiment;

FIG. 7 is a flowchart illustrating a shaped object manufacturing process according to the embodiment;

FIG. 8A is a cross-sectional view of the thermally-expandable sheet, illustrating the shaped object manufacturing process according to the embodiment;

FIG. 8B is another cross-sectional view of the thermally-expandable sheet, illustrating the shaped object manufacturing process according to the embodiment;

FIG. 8C is another cross-sectional view of the thermally-expandable sheet, illustrating the shaped object manufacturing process according to the embodiment;

FIG. 8D is another cross-sectional view of the thermally-expandable sheet, illustrating the shaped object manufacturing process according to the embodiment;

FIG. 8E is another cross-sectional view of the thermally-expandable sheet, illustrating the shaped object manufacturing process according to the embodiment;

FIG. 9 is a flowchart illustrating a shaped object manufacturing process according to another embodiment;

FIG. 10A is a cross-sectional view of the thermally-expandable sheet, illustrating a shaped object manufacturing process in accordance with the another embodiment;

FIG. 10B is another cross-sectional view of the thermally-expandable sheet, illustrating the shaped object manufacturing process in accordance with the another embodiment;

FIG. 10C is another cross-sectional view of the thermally-expandable sheet, illustrating the shaped object manufacturing process in accordance with the another embodiment;

FIG. 10D is another cross-sectional view of the thermally-expandable sheet, illustrating the shaped object manufacturing process in accordance with the another embodiment;

FIG. 11 is a graph illustrating a color difference between a thermally-expandable sheet and the photothermal conversion layer before and after expansion of a thermal expansion layer according to the embodiment;

FIG. 12 is drawing illustrating the thermally-expandable sheet for which the thermal expansion layer is expanded according to the embodiment;

FIG. 13 is graph illustrating a color difference between the photothermal conversion layer and the thermally-expandable sheet before and after expansion of the thermal expansion layer according to the embodiment;

FIG. 14 is a graph illustrating a color difference between the photothermal conversion layer and the thermally-expandable sheet before and after thermal expansion of the thermal expansion layer according to the embodiment; and

FIG. 15 is a graph illustrating a color difference between the photothermal conversion layer and the thermally-expandable sheet before and after thermal expansion of the thermally-expandable sheet according to the embodiment.

In the present disclosure, a shaped object is expressed by protrusion of an expansion layer 22 at the surface of a thermally-expandable sheet 20. Further, in the present specification, the term "shaped object" is taken to generally include shapes such as simple shapes, geometrical shapes, letters, and decorations. Here, "decorations" refer to objects that appeal to the aesthetic sense through visual and/or tactile sensation. Further, the expression "shaped object" does not simply refer to the forming of a shaped object, but should be construed to also include concepts such as adding decorations and forming decorations. The phrase "decorative shaped object" refers to a shaped object formed as a result of adding a decoration or forming a decoration.

The shaped object of the present embodiment has convexities and/or concavities in a direction, such as a Z-axis direction, perpendicular to a plane that is a specific two-dimensional plane, such as an XY plane, within a three-dimensional space. Although this type of shaped object is an example of a three-dimensional (3D) image, in order to provide distinction versus a shaped object manufactured by so-called 3D printer technology, this type of shaped object is also referred to as a 2.5-dimensional (2.5D) image or a pseudo-3D image.

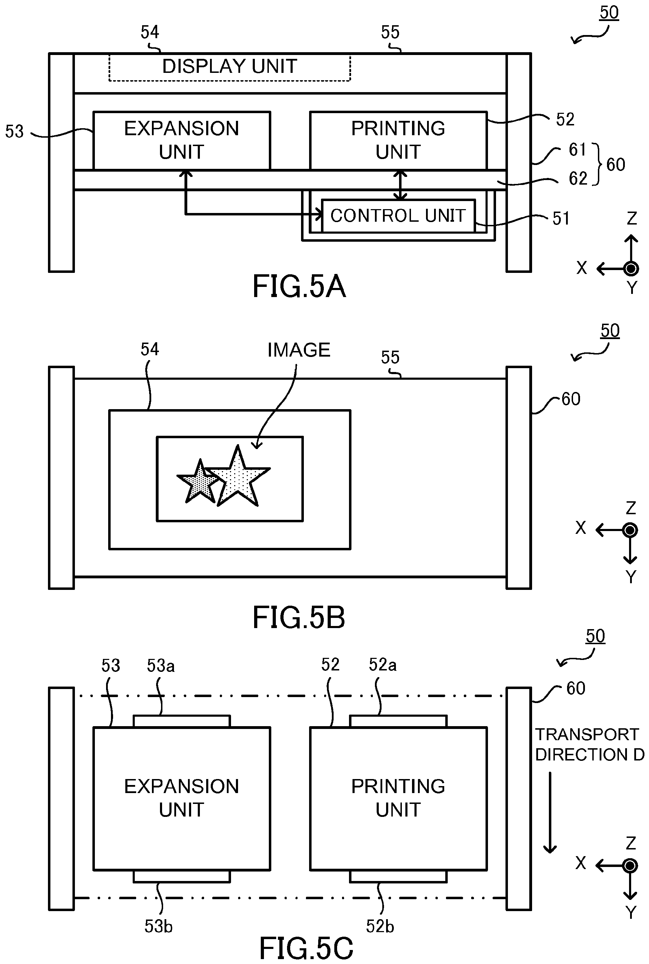

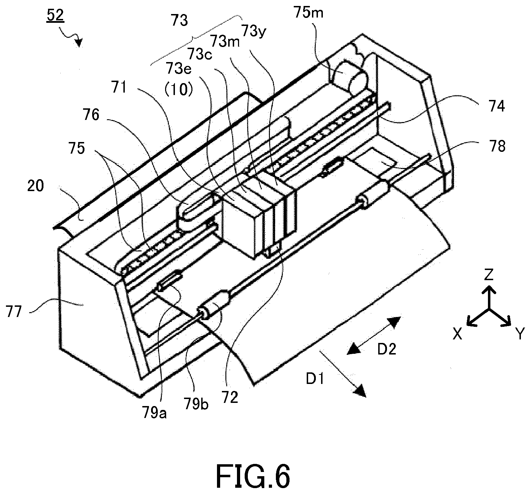

Hereinafter, a description is given of an ink, and a thermally-expandable sheet and a manufacturing method for a shaped object using the ink according to embodiments of the present embodiment with reference to the drawings. An ink 10 as described below is an ink (referred to hereinafter as a foaming ink) for causing expansion of a thermal expansion layer. As described later, in the embodiments, a shaped object manufacturing system 50 is used as an example of the printing apparatus. FIGS. 5A to 5C schematically illustrate this shaped object manufacturing system 50. A configuration in which the shaped object manufacturing system 50 is used to form a shaped object having convexities and/or concavities is used as an example of the printing method. The printing unit 52 illustrated in FIG. 6 is provided in the shaped object manufacturing system 50, and the ink 10 of the present embodiment is set in the printing unit 52 and used to form a photothermal conversion layer on a thermally-expandable sheet 20.

The ink 10 according to the present embodiment includes an inorganic infrared absorbing agent in a white ink. That is to say, the ink 10 is white in a state unmixed with the inorganic infrared absorbing agent. Further, the base of the ink 10 may also be said to be white. If a coloring agent is added to the ink 10, the ink 10 is white in a state in which the inorganic infrared absorbing agent and the coloring agent are not included.

The ink 10 according to the present embodiment may be an ultraviolet-curable (UV-curable) ink. In this case, the ink 10 includes the inorganic infrared absorbing agent, and further includes an ultraviolet-curable resin (ultraviolet-curable monomer, ultraviolet-curable oligomer) and a polymerization initiator. Since the ink 10 of the present embodiment is white, the ink 10 further includes a material exhibiting white coloration. Examples that can be cited of materials that exhibit white coloration include, without limitation, white pigments such as zinc oxide and titanium oxide.

Cited examples of the ultraviolet-curable monomer include: isobornyl acrylate, phenoxyethyl acrylate, or the like mono-functional monomers; trimethylolpropane triacrylate, polyethylene glycol diacrylate, or the like poly-functional monomers; or the like. Further, polyester acrylates, polyether acrylates, epoxy acrylates, urethane acrylates, or the like are cited as the ultraviolet-curable oligomer. A urethane acrylate oligomer is preferably used as the ultraviolet-curable oligomer. Either a photo-cleavage type initiator or a hydrogen-abstraction type initiator can be used as the polymerization initiator, and a combination of multiple types of photo-polymerization initiators can be used. Acyl phosphine oxide compounds, acetophenone compounds, or the like are cited as the photo-cleavage type initiator; and benzophenone compounds, thioxanthone compounds, or the like are cited as the hydrogen-abstraction type initiator. In addition to these initiators, any known initiator can be used. Further, the ink 10 may further include solvents and additives.

The photothermal conversion layer formed by the ink 10 is preferably deforms in accordance with deforming of the thermal expansion layer 22. Thus the ultraviolet-curable resin included in the ink 10 preferably has rubber elasticity. Without particular limitation, urethane acrylates are advantageous as the ultraviolet-curable resin (ultraviolet-curable monomer, ultraviolet-curable-oligomer) having rubber elasticity.

The ink 10 of the present embodiment is used in a printing unit 52 such as the inkjet printer illustrated in FIG. 6, for example. Specifically, the ink 10 is loaded within an ink cartridge 73 and is arranged within the printing unit 52 as illustrated in FIG. 6.

The ink 10 may include a non-white coloring agent. For example, the ink 10 may include the coloring agent with an object such as adjusting color of the ink in order to approach the color of the surface of the thermally-expandable sheet 20. No particular limitation is placed on the color of the coloring agent. The coloring agent may have a color selected appropriately from among yellow, as well as cyan, magenta, or the like, or may have any other color. The concentration of the coloring agent in the ink 10 is freely selected.

An inorganic material used as the inorganic infrared absorbing agent has higher absorptivity of light (absorptivity) in at least one region of the infrared light spectrum than in the visible light spectrum. In particular, the inorganic infrared absorbing agent preferably has a higher absorptivity of light in the near-infrared region than in the visible light spectrum. The visible light transparency of the ink 10 can be improved and the color of the ink 10 can be suppressed by selecting a material for which light transmittance (low absorptivity) in the visible light spectrum is high. By using a photothermal conversion layer printed using the ink 10, blurring of the color of the color ink layer can be prevented particularly in comparison to when using traditional carbon-containing inks. Thus a white or nearly white photothermal conversion layer can be formed.

In this embodiment, examples of the inorganic infrared absorbing agent include metal oxides, metal borides, and metal nitrides.

Specific examples of the metal oxides include tungsten oxide compounds, indium oxide, indium tin oxide (ITO), antimony tin oxide (ATO), titanium oxide, zirconium oxide, tantalum oxide, cesium oxide, and zinc oxide.

A metal multi-boride compound is preferable and a metal hexaboride compound is particularly preferable as the metal boride, and one or a plurality of materials selected from the group consisting of lanthanum hexaboride ($LaB_6$), cerium hexaboride ($CeB_6$), praseodymium hexaboride ($PrB_6$), neodymium hexaboride ($NdB_6$), gadolinium hexaboride ($GdB_6$), terbium hexaboride ($TbB_6$), dysprosium hexaboride ($DyB_6$), holmium hexaboride ($HoB_6$), yttrium hexaboride ($YB_6$), samarium hexaboride ($SmB_6$), europium hexaboride ($EuB_6$), erbium hexaboride ($ErB_6$), thulium hexaboride ($TmB_6$), ytterbium hexaboride ($YbB_6$), lutetium hexaboride ($LuB_6$), lanthanum hexaboride cerium ($(La, Ce)B_6$), strontium hexaboride ($SrB_6$), calcium hexaboride ($CaB_6$), or the like can be used as the metal boride.

Examples of the metal nitrides include titanium nitride, niobium nitride, tantalum nitride, zirconium nitride, hafnium nitride, and vanadium nitride.

The tungsten oxide compound is expressed by the following formula.

$$MxWyOz \ldots \qquad (I)$$

Here, element M is at least one element selected from the group consisting of Cs, Rb, K, Tl, In, Ba, Li, Ca, Sr, Fe, and Sn, W is tungsten, and O is oxygen.

The value of x/y preferably satisfies the relationship $0.001 \leq x/y \leq 1.1$, and x/y is particularly preferably in the vicinity of 0.33. Additionally, the value of z/y preferably satisfies the relationship $2.2 \leq z/y \leq 3.0$. Specific examples of the formula of the tungsten oxide compound include $Cs_{0.33}WO_3$, $Rb_{0.33}WO_3$, $K_{0.33}WO_3$, and $Tl_{0.33}WO_3$.

Of the examples of the inorganic infrared absorbing agent described above, the metal hexaboride compound or the tungsten oxide compound is preferable, and the lanthanum hexaboride ($LaB_6$) or cesium tungsten oxide is particularly preferable from the perspectives of obtaining high light absorptivity (low light transmittance) in the near-infrared region and high transmittance in the visible light spectrum. Any one of the inorganic infrared absorbing agents described above may be used alone, or a combination of two or more different materials may be used.

While not particularly limited thereto, the ink 10 of this embodiment includes the inorganic infrared absorbing agent at a concentration of 20 wt.% to 0.10 wt.%.

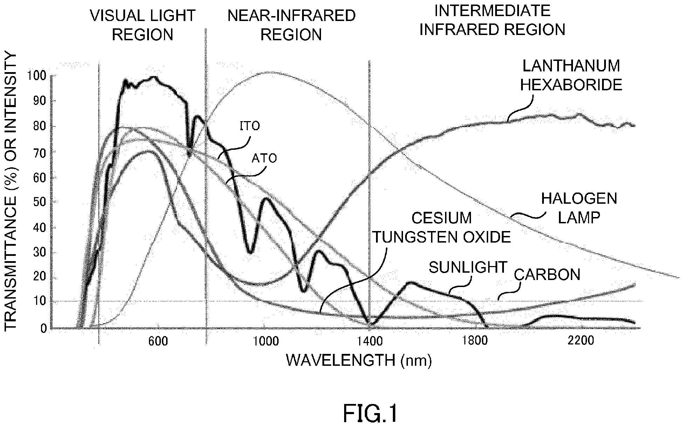

FIG. 1 illustrates distributions of the light transmittance of carbon, ITO, ATO, cesium tungsten oxide, and $LaB_6$,

the sunlight intensity spectrum, and the spectral distribution of a halogen lamp. In FIG. 1, the sunlight intensity spectrum and the spectral distribution of the halogen lamp each have intensities that peak at 100. As illustrated in FIG. 1, the carbon traditionally used to form photothermal conversion layers displays substantially constant transmittance in various wavelength ranges. Carbon has low transmittance (high absorptivity) and exhibits a black color in the visible light spectrum. In contrast, ITO and ATO, which are examples of the metal oxide, have remarkably high transmittance in the visible light spectrum. In addition, ITO and ATO display lower transmittance in the near-infrared region and even lower transmittance (high absorptivity) in the intermediate infrared region than in the visible light spectrum. Furthermore, the cesium tungsten oxide, which is an example of the tungsten oxide compound, displays lower transmittance in the near-infrared region than in the visible light spectrum. Moreover, the lanthanum hexaboride, which is an example of the metal hexaboride compound, displays lower transmittance in the near-infrared region of the infrared spectrum than in the visible light spectrum.

FIG. 1 also depicts the spectral distribution of the halogen light used as an irradiating unit. Light irradiated from the halogen lamp displays high intensity, particularly in the near-infrared region. The cesium tungsten oxide and the lanthanum hexaboride depicted in FIG. 1 have low transmittance and display high absorptivity in the near-infrared region, where the light irradiated from the halogen lamp displays high intensity. As such, when the halogen lamp is used as the irradiating unit, cesium tungsten oxide or the $LaB_6$ are preferably used because light will be absorbed with particularly high efficiency in the near-infrared region, where the light radiated from the halogen lamp displays high intensity. In addition, provided that high absorptivity in the near-infrared region is displayed, a material other than the cesium tungsten oxide and the lanthanum hexaboride may be used.

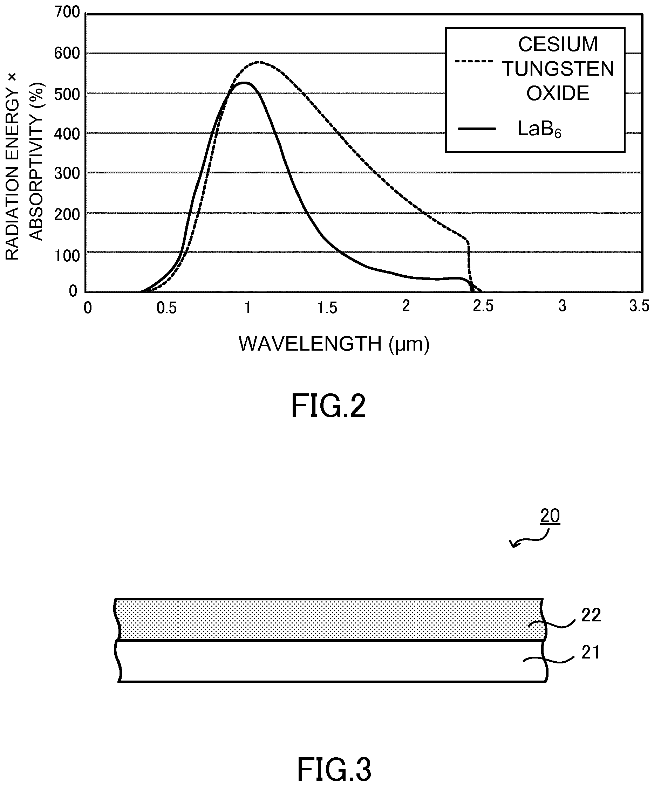

FIG. 2 is a graph illustrating the products of multiplying the absorptivity of cesium tungsten oxide or the absorptivity of $LaB_6$ by the radiation energy (%) from the halogen lamp at various wavelengths. Here, the ratio (%) of radiation energy at a temperature (2900K) to black-body radiation (peak normalized at 100%) at a reference temperature (2000K) is used as the radiation energy (%). Cesium tungsten oxide is clearly capable of excellent energy absorption, particularly in the near-infrared region and intermediate infrared region.

Values obtained by integrating the graph by wavelength correspond to amounts of energy absorbable by cesium tungsten oxide and the $LaB_6$. Accordingly, provided that the foaming height of the thermally expandable material is not saturated, the ratio of these integral values is proportional to the foaming height. Specifically, the ratio of integral values of cesium tungsten oxide to $LaB_6$ is 1 to 0.58. Thus, the foaming height obtainable in a photothermal conversion layer using $LaB_6$ is about 0.58 times the foaming height obtainable in a photothermal conversion layer using cesium tungsten oxide.

Next, the thermally-expandable sheet 20, on which the photothermal conversion layer is to be formed by the ink 10, of this embodiment is described with reference to the drawings. As illustrated in FIG. 3, the thermally-expandable sheet 20 includes a base material 21 and a thermal expansion layer 22. While described in detail later, the thermally-expandable sheet 20 is subjected to printing by the shaped object manufacturing system 50 outlined in FIGS. 5A to 5C, thereby forming the shaped object having convexities and/or concavities.

The base material 21 is implemented as a sheet-like member (including films) and supports the thermal expansion layer 22 and the like. Examples of the base material 21 include paper such as high-quality paper, and commonly used plastic film such as polypropylene, polyethylene terephthalate (PET), and polybutylene terephthalate (PBT). Additionally, fabric or the like may be used as the base material 21. The base material 21 has sufficient strength so that, when part or all of the thermal expansion layer 22 swells due to foaming, the opposite side (lower side as illustrated in FIG. 3) of the base material 21 does not bulge, and wrinkles, waves, and the like do not form. The base material 21 also has heat resistance sufficient to resist heating carried out to foam the thermal expansion layer 22.

The thermal expansion layer 22 is disposed on a first face (the upper face illustrated in FIG. 3) of the base material 21. The thermal expansion layer 22 is a layer that swells to a size in accordance with heating temperature and heating time, and includes a plurality of thermally expandable materials (thermally expandable microcapsules, microcapsules) dispersed/disposed therethroughout. While described in detail later, in this embodiment, a photothermal conversion layer is formed on the ink receiving layer 23 provided on the upper face (surface) of the base material 21 and/or on the lower face (back face) of the base material 21. The regions where the photothermal conversion layer is provided are heated by irradiating the photothermal conversion layer with light. The thermal expansion layer 22 absorbs the heat generated by the photothermal conversion layer provided on the surface and/or back face of the thermally-expandable sheet 20, foams, and swells. The causing of the thermally-expandable sheet 20 to swell may be selectively limited to only specific regions.

A thermoplastic resin selected from ethylene vinyl acetate polymers, acrylic polymers, and the like is used as a binder. The thermally expandable microcapsules include propane, butane, or a similar low boiling point volatile substance encapsulated in thermoplastic resin shells. The shells are formed from a thermoplastic resin selected from, for example, polystyrene, polyvinyl chloride, polyvinylidene chloride, polyvinyl acetate, polyacrylic acid ester, polyacrylonitrile, polybutadiene, and copolymers thereof. An average particle size of the thermally expandable microcapsules is about 5 to 50 $\mu$m. When these microcapsules are heated to a thermal expansion start temperature or higher, the polymer shells that are made from the resin soften and the low boiling point volatile substance encapsulated therein vaporizes. The pressure resulting from this vaporization causes the capsules to swell. While dependent on the characteristics of the microcapsules to be used, the microcapsules swell to a size about five-times larger than that prior to swelling.

In the present embodiment, the ink 10 is white or nearly white. Thus the photothermal conversion layer formed from the ink 10 of the present embodiment exhibits white or nearly white coloration.

Even in the case in which the surface of the thermally-expandable sheet 20 (surface on which the thermal expansion layer 22 is formed) is not white, the photothermal conversion layer is white or nearly white, and thus the color ink layer arranged on the photothermal conversion layer can be allowed to be freshly colored. Thus the effects of the photothermal conversion layer on the color of the shaped object can be decreased.

In addition, particularly in the case in which the surface on which the photothermal conversion layer is formed among the surfaces of the thermally-expandable sheet 20 is white, the photothermal conversion layer arranged on the thermally-expandable sheet 20 is not visually discernable, or has a coloration so as to be only slightly visually discernable. Thus the effects of the photothermal conversion layer on the color of the shaped object can be decreased. In this case, even in regions where the color ink layer 42 are not formed, the photothermal conversion layer cannot be visually discerned, or is difficult to visually discern.

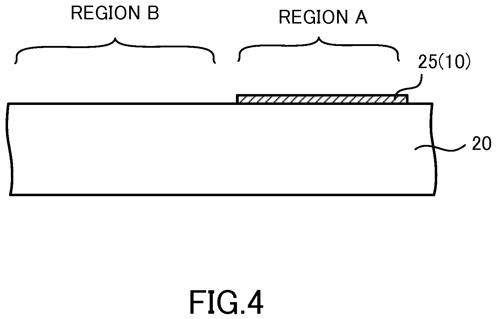

In the present embodiment, in the case in which the thermally-expandable sheet 20 is white or nearly white, there is no color difference, or the color difference is extremely small, when comparison is made between the photothermal conversion layer and the surface of the thermally-expandable sheet where the photothermal conversion layer is not formed. Specifically, the comparison by the color difference is performed in the following manner. As illustrated in FIG. 4, the ink 10 of the present embodiment is arranged on the thermally-expandable sheet 20 and forms an ink layer 25 that corresponds to the photothermal conversion layer. A portion of the ink 10 is absorbed by the surface of the thermally-expandable sheet 20, and although this does not result in a layer having a clearly illustrated boundary, for convenience in the description, the ink arranged on the thermally-expandable sheet 20 is illustrated in the form of a layer and is termed the ink layer 25. Next, a color (of region A illustrated in FIG. 4) of the ink layer 25 and a color (of region B illustrated in FIG. 4) of the surface of the thermally-expandable sheet 20 on which the ink layer 25 is not arranged are compared from above as viewed in FIG. 4. The comparison is performed for at least one of the pre-expansion thermal expansion layer 22 of the thermally-expandable sheet 20 or the post-expansion thermal expansion layer 22, and at least one of these members may have no color difference or may have an extremely small color difference.

The color difference of the present embodiment may be expressed using L*a*b* color coordinates, referred to hereinafter as the Lab color coordinate system. In this case, the color of the ink layer 25 (color of the region A illustrated in FIG. 4) and the color of the surface of the thermally-expandable sheet 20 where the ink layer 25 is not arranged (color of the region B illustrated in FIG. 4) are measured using a colorimeter to find numerical values of L*, a*, and b*. Thereafter, the below Equation 1 is used to calculate $\Delta E^*ab$ (referred to hereinafter as $\Delta E$) from the measured values of L*, a*, and b* of the regions A and B.

$$\Delta E^*ab = [(\Delta L^*)^2 + (\Delta a^*)^2 + (\Delta b^*)^2]^{1/2} \qquad ... \qquad (\text{Equation 1})$$

$\Delta L^*$ is a difference between L* of the region A and L* of the region B. $\Delta a^*$ and $\Delta b^*$ are similarly differences in the values for the region A and the region B. The "*" of the expression L*a*b* is omitted below.

Here, the expression "no color difference" in the present embodiment means that the color difference $\Delta E$ of the Lab color coordinate system is included in a range of 1.6 to 3.2 or is below this range ($\Delta E$ is less than or equal to 3.2). The $\Delta E$ range of 1.6 to 3.2 is termed an "A-grade allowable difference", is a color difference of a level that would be hardly noticed during side-by-side comparison of color, and is a color difference of a level such that the colors would be generally considered to be the same color. The color difference $\Delta E$ is further preferably included in or below the range of 0.8 to 1.6. The $\Delta E$ range of 0.8 to 1.6 is termed an "AA-grade allowable difference", and is a color difference of a level that would be slightly noticed during side-by-side comparison of color.

Shaped Object Manufacturing System

Next, the shaped object manufacturing system 50 that performs the printing on the thermally-expandable sheet 20 to form the shaped object is described. As illustrated in FIGS. 5A to 5C, the shaped object manufacturing system 50 includes a control unit 51, a printing unit 52, an expansion unit 53, a display unit 54, a top panel 55, and a frame 60. FIG. 5A is a front view of the shaped object manufacturing system 50; FIG. 5B is a plan view of the shaped object manufacturing system 50 with the top panel 55 closed; and FIG. 5C is a plan view of the shaped object manufacturing system 50 with the top panel 55 open. In FIGS. 5A to 5C, the X direction is the same as the horizontal direction, the Y direction is the same as a transport direction D in which the sheet is transported, and the Z direction is the same as the vertical direction. The X direction, the Y direction, and the Z direction are orthogonal to each other.

The control unit 51, the printing unit 52, and the expansion unit 53 are each mounted in the frame 60 as illustrated in FIG. 5A. Specifically, the frame 60 includes a pair of substantially rectangular side face panels 61 and a connecting beam 62 provided between the side face panels 61. The top panel 55 spans between upper portions of the side face panels 61. The printing unit 52 and the expansion unit 53 are disposed side-by-side in the X-direction on the connecting beam 62 that spans between the side face panels 61, and the control unit 51 is fixed below the connecting beam 62. The display unit 54 is embedded in the top panel 55 so as to be flush with the upper face of the top panel 55.

The control unit 51 includes a central processing unit (CPU), a read only memory (ROM), a random access memory (RAM), and the like, and controls the printing unit 52, the expansion unit 53, and the display unit 54.

The printing unit 52 is an inkjet printing apparatus. As illustrated in FIG. 5C, the printing unit 52 includes a loading section 52a for receiving the thermally-expandable sheet 20, and a discharge section 52b for discharging the thermally-expandable sheet 20. The printing unit 52 prints a designated image on the front face or the back face of the thermally-expandable sheet 20 received through the loading section 52a, and discharges the thermally-expandable sheet 20 on which the image has been printed through the discharge section 52b. Additionally, the printing unit 52 includes color ink (cyan (C), magenta (M), and yellow (Y)) for forming a color ink layer 42 (described later), and the ink 10 for forming a front side photothermal conversion layer 41 and a back side photothermal conversion layer 43. Moreover, the printing unit 52 may also include a black color ink free of carbon black as color ink for forming black or gray color in the color ink layer 42. A UV-curable ink may be used as the color ink.

The printing unit 52 acquires from the control unit 51 color image data representing a color image (color ink layer 42) to be printed on the front face of the thermally-expandable sheet 20, and prints the color image (color ink layer 42) using the color ink (cyan, magenta, and yellow) on the basis of the color image data. Black or gray color in the color ink layer 42 is formed by blending the three CMY colors or by using a black color ink free of carbon black.

The printing unit 52 prints the front side photothermal conversion layer 41 on the basis of front face foaming data using the ink 10. This front face foaming data is data that indicates the portion of the front face of the thermally-expandable sheet 20 to be foamed and caused to swell. Likewise, the printing unit 52 prints the back side photothermal conversion layer 43 on the basis of back face foaming data using the ink 10. This back face foaming data is data that indicates the portion of the back face of the thermally-expandable sheet 20 to be foamed and caused to swell. The swelling height of the thermal expansion layer 22 corresponds to the density of the ink 10, and greater densities lead to greater swelling heights. As such, the shade of the ink 10 is determined by area coverage modulation or a similar technique such that the density of the ink 10 corresponds to the target height.

FIG. 6 illustrates a detailed configuration of the printing unit 52. As illustrated in FIG. 6, the printing unit 52 includes a carriage 71 capable of reciprocating movement in a main scanning direction D2 (the X-direction), which is orthogonal to a sub-scanning direction D1 (the Y-direction). The sub-scanning direction D1 is the direction in which the thermally-expandable sheet 20 is transported.

A print head 72 that executes the printing, and ink cartridges 73 (73e, 73c, 73m, and 73y) containing ink are attached to the carriage 71. The ink cartridges 73e, 73c, 73m, and 73y respectively contain the ink 10 of the present embodiment, and cyan (C), magenta (M), and yellow (Y) color ink. Each ink is discharged from a corresponding nozzle of the print head 72. Moreover, the print head 72 is equipped with a non-illustrated UV irradiating unit that cures the ink after discharge of the ink.

The carriage 71 is supported so as to be freely slidable on a guide rail 74, and is sandwiched between drive belts 75. The drive belts 75 are driven by the rotation of a motor 75m and, as a result, the carriage 71 moves in the main scanning direction D2 together with the print head 72 and the ink cartridges 73.

A platen 78 is provided in a lower portion of a frame 77, at a position facing the print head 72. The platen 78 extends in the main scanning direction D2 and forms a portion of a transport path of the thermally-expandable sheet 20. A pair of feed rollers 79a (lower roller not illustrated in the drawings) and a pair of discharge rollers 79b (lower roller not illustrated in the drawings) are provided in the transport path of the thermally-expandable sheet 20. The pair of feed rollers 79a and the pair of discharge rollers 79b transport the thermally-expandable sheet 20 in the sub-scanning direction D1 while supported on the platen 78.

The printing unit 52 is connected to the control unit 51 via a flexible communication cable 76. The control unit 51 controls the print head 72, the motor 75m, the pair of feed rollers 79a, and the pair of discharge rollers 79b via the flexible communication cable 76. Specifically, the control unit 51 controls the pair of feed rollers 79a and the pair of discharge rollers 79b to transport the thermally-expandable sheet 20. Additionally, the control unit 51 causes the motor 75m to rotate, thereby moving the carriage 71 and transporting the print head 72 to an appropriate position in the main scanning direction D2.

The expansion unit 53 is an expansion device that applies heat to the thermally-expandable sheet 20 to cause the thermally-expandable sheet 20 to swell. As illustrated in FIG. 5C, the expansion unit 53 includes a loading section 53a for loading the thermally-expandable sheet 20, and a discharge section 53b for discharging the thermally-expandable sheet 20. The expansion unit 53 transports the thermally-expandable sheet 20 loaded through the loading section 53a and, at the same time, applies heat to the thermally-expandable sheet 20, thereby causing the thermally-expandable sheet 20 to swell. An irradiating unit (not illustrated in the drawings) is provided in the expansion unit 53. The irradiating unit is fixed within the expansion unit 53. The thermally-expandable sheet 20 is moved at a constant speed past the vicinity of the irradiating unit and, as a result, the entire thermally-expandable sheet 20 is heated. Note that, when printing the ink 10 at a low density to make the photothermal conversion layer less conspicuous, the target swelling height can still be obtained by reducing the transport speed and lengthening the amount of time that the thermally-expandable sheet 20 is irradiated with the light.

In one example, the irradiating unit is a halogen lamp that irradiates the thermally-expandable sheet 20 with light in the near-infrared region (750 to 1400 nm wavelength range), the visible light spectrum (380 to 750 nm wavelength range), or the intermediate infrared region (1400 to 4000 nm wavelength range). The wavelength of the light radiated from the halogen lamp has the characteristics illustrated in FIG. 2. Specifically, the halogen lamp irradiates with light of particularly high intensity in the near-infrared region. Using, as the inorganic infrared absorbing agent included in the ink 10 of this embodiment, a material having higher absorptivity in the near-infrared region than in the visible light region is preferable because the wavelength range at which the halogen lamp has high intensity and the wavelength range at which the inorganic infrared absorbing agent displays efficient absorptivity will match. In addition to the halogen lamp, a xenon lamp or the like may also be used as the irradiating unit. In this case, a material having high absorptivity in the wavelength range where the emission intensity of the lamp is high is preferably used as the inorganic infrared absorbing agent. Additionally, light is converted to heat more efficiently in the regions where the photothermal conversion layer is printed than in regions where the photothermal conversion layer is not printed. Thus within the thermal expansion layer 22, primarily the region where the photothermal conversion layer is heated, and as a result, the region of the thermal expansion layer 22 where the photothermal conversion layer is printed swells.

The display unit 54 includes a touch panel or the like. In the example illustrated in FIG. 5B, the display unit 54 displays an image (the stars illustrated in FIG. 5B) printed on the thermally-expandable sheet 20 by the printing unit 52. Additionally, the display unit 54 displays operating instructions or the like, and a user can operate the shaped object manufacturing system 50 by touching the display unit 54.

Shaped Object Manufacturing Processing

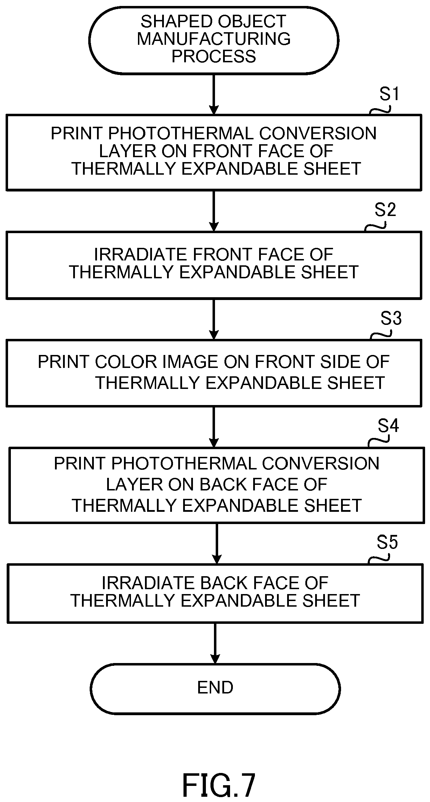

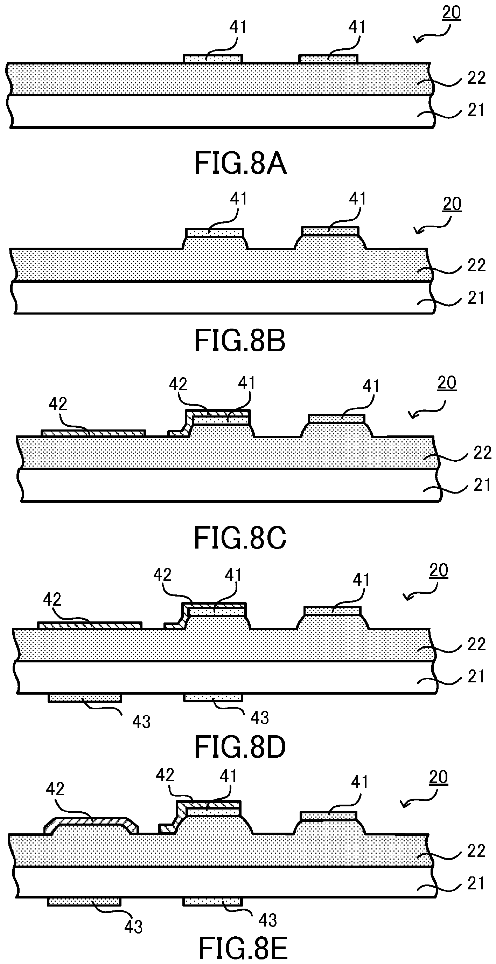

Next, processing to form the shaped object on the thermally-expandable sheet 20 by the shaped object manufacturing system 50 is described with reference to the flowchart illustrated in FIG. 7, and the cross-sectional views of the thermally-expandable sheet 20 illustrated in FIGS. 8A to 8E.

Firstly, a user prepares a thermally-expandable sheet 20 on which the shaped object is to be later formed, and designates the color image data, the front face foaming data, and the back face foaming data using the display unit 54. Then, the user inserts the thermally-expandable sheet 20 into the printing unit 52 with the front face facing upward. The printing unit 52 prints a photothermal conversion layer (the front side photothermal conversion layer 41) on the front face of the inserted thermally-expandable sheet 20 (step S1). The front side photothermal conversion layer 41 is formed by the ink 10 described above. The printing unit 52 discharges the ink 10 of this embodiment onto the front face of the thermally-expandable sheet 20 in accordance with the designated front face foaming data. As a result, the front side photothermal conversion layer 41 is formed on the ink receiving layer 23, as illustrated in FIG. 8A.

Secondly, the user inserts the thermally-expandable sheet 20 having the front side photothermal conversion layer 41 printed thereon into the expansion unit 53 with the front face facing upward. The expansion unit 53 heats the inserted thermally-expandable sheet 20 from the front face (step S2). Specifically, the irradiating unit of the expansion unit 53 radiates light onto the front face of the thermally-expandable sheet 20. The front side photothermal conversion layer 41 printed on the front face of the thermally-expandable sheet 20 absorbs the irradiating light, thereby generating heat. As a result, as illustrated in FIG. 8B, the region of the thermally-expandable sheet 20 having the front side photothermal conversion layer 41 printed thereon bulges and swells. In FIG. 8B, when the density of the ink 10 is higher in the front side photothermal conversion layer 41 on the right side than in the front side photothermal conversion layer 41 on the left side, the region printed at the higher density can be made to bulge higher, as illustrated in FIG. 8B.

Thirdly, the user inserts the thermally-expandable sheet 20, for which the front face has been heated and caused to swell, into the printing unit 52 with the front face facing upward. The printing unit 52 prints a color image (the color ink layer 42) on the front face of the inserted thermally-expandable sheet 20 (step S3). Specifically, the printing unit 52 discharges the various cyan (C), magenta (M), and yellow (Y) inks onto the front face of the thermally-expandable sheet 20 in accordance with the designated color image data. As a result, the color ink layer 42 is formed on the thermal expansion layer 22 and the photothermal conversion layer 41, as illustrated in FIG. 8C.

Fourthly, the user inserts the thermally-expandable sheet 20 having the color ink layer 42 printed thereon into the printing unit 52 with the back face facing upward. The printing unit 52 prints the photothermal conversion layer (back face photothermal layer 43) on the back face of the inserted thermally-expandable sheet 20 (step S4). The back side photothermal conversion layer 43 is a layer formed by the ink 10 of the present embodiment in the same manner as the front face photothermal conversion layer 41 printed on the front surface of the thermally-expandable sheet 20. The printing unit 52 discharges the ink 10 on the back face of the thermally-expandable sheet 20 in accordance with the designated back face foaming data. This results in formation of the back face photothermal layer 43 on the back face of the base material 21 as illustrated in FIG. 8D. For the back side photothermal conversion layer 43 as well, as illustrated, when the density of the ink 10 is higher in the back side photothermal conversion layer 43 on the left side than in the back side photothermal conversion layer 43 on the right side, the region printed at the higher density can be made to bulge higher.

Fifthly, the user inserts the thermally-expandable sheet 20 with the back face photothermal layer 43 printed thereon into the expansion unit 53 with the back face facing upward. The expansion unit 53 from the back face heats the inserted thermally-expandable sheet 20 (step S5). Specifically, the irradiating unit (not illustrated in the drawings) of the expansion unit 53 irradiates the back face of the thermally-expandable sheet 20 with light. The back side photothermal conversion layer 43 printed on the back face of the thermally-expandable sheet 20 absorbs the light of the irradiation, thereby generating heat. As a result, as illustrated in FIG. 8E, the region of the thermally-expandable sheet 20 having the back side photothermal conversion layer 43 printed thereon bulges and swells.

The shaped object is formed using the thermally-expandable sheet 20 as a result of carrying out the procedures described above.

The ink 10 of this embodiment includes the inorganic infrared absorbing agent demonstrating higher absorptivity in at least one wavelength region of the infrared spectrum than in the visible light spectrum, and as a result, enables making of the formed photothermal conversion layer with white or nearly white coloration. Thus a thermal expansion layer can be provided that has the white photothermal conversion layer. Thus the imparting of effects on the color of the color ink layer arranged on the photothermal conversion layer can be suppressed. Moreover, in the case in which the front surface of the thermally-expandable sheet is white, the photoconversion layer can be formed that is not visually discernable, or is nearly visually indiscernible. By using the ink 10 of this embodiment in this manner, an ink, a thermally-expandable sheet using the ink, and a manufacturing method for a shaped object can be provided that are capable of printing the photothermal conversion layer having greatly reduced effects on the color of the shaped object.

Another Embodiment of Shaped Object Manufacturing Processing

The shaped object manufacturing processing is not limited to the process order illustrated in FIG. 7, and the order of the steps may be rearranged as described in detail below.

For ease of description, the steps illustrated in FIG. 7 are referred to in the following manner. The step of forming the front side photothermal conversion layer (hereinafter referred to as "front side conversion layer") on the front side (the upper face in FIG. 4) of the thermally-expandable sheet 20 (step S1 in FIG. 7) is referred to as a front side conversion layer forming step. The step of irradiating the front side of the thermally-expandable sheet 20 with electromagnetic waves (light) and causing the thermal expansion layer to swell (step S2 in FIG. 7) is referred to as a front side swelling step. The step of printing the color image on the front side of the thermally-expandable sheet (step S3 in FIG. 7) is referred to as a color printing step. The step of forming the back side photothermal conversion layer (hereinafter referred to as "back side conversion layer") on the back side (the lower face in FIG. 4) of the thermally-expandable sheet (step S4 in FIG. 7) is referred to as a back side conversion layer forming step. The step of irradiated the back side of the thermally-expandable sheet with electromagnetic waves and causing the thermal expansion layer to swell (step S5 in FIG. 7) is referred to as a back side swelling step.

For example, the shaped object manufacturing processing is not limited to the order of steps illustrated in FIG. 7, and the back side conversion layer can be formed beforehand. Specifically, the back side conversion layer forming step is performed initially, and thereafter the back side swelling step is performed to perform the back side conversion layer forming step. In this case, when processing is described using the flowchart illustrated in FIG. 7, step S4 and step S5 are performed, and then steps S1 to S3 in order are performed. Moreover, after all of the steps for causing the thermal expansion layer to swell have been completed, a color image may be printed. In this case, the front side conversion layer forming step, the front side swelling step, the back side conversion layer forming step, and the back side swelling step are sequentially performed, and then the color printing step is performed. That is, in terms of FIG. 7, step S1 and step S2 are executed, then step S4 and step S5 are executed, and then further step S3 is executed. Moreover, the back side conversion layer forming step and the back side swelling step may be performed first.

The color printing step and the front side conversion layer forming step may be combined to print the color ink layer and the front side conversion layer in a single step. In this embodiment, the color ink layer 42 and the front side conversion layer 41 are printed simultaneously.

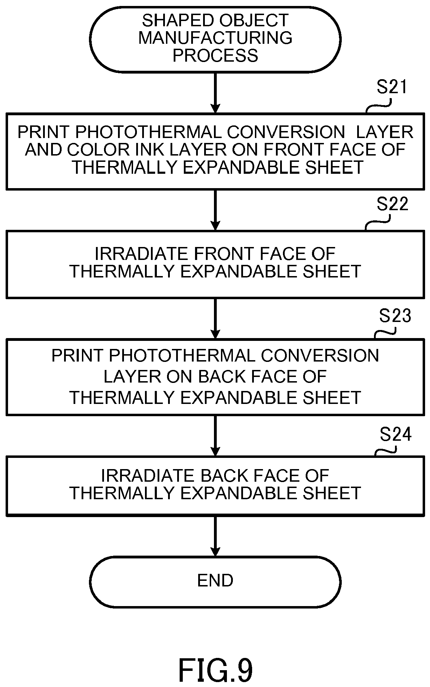

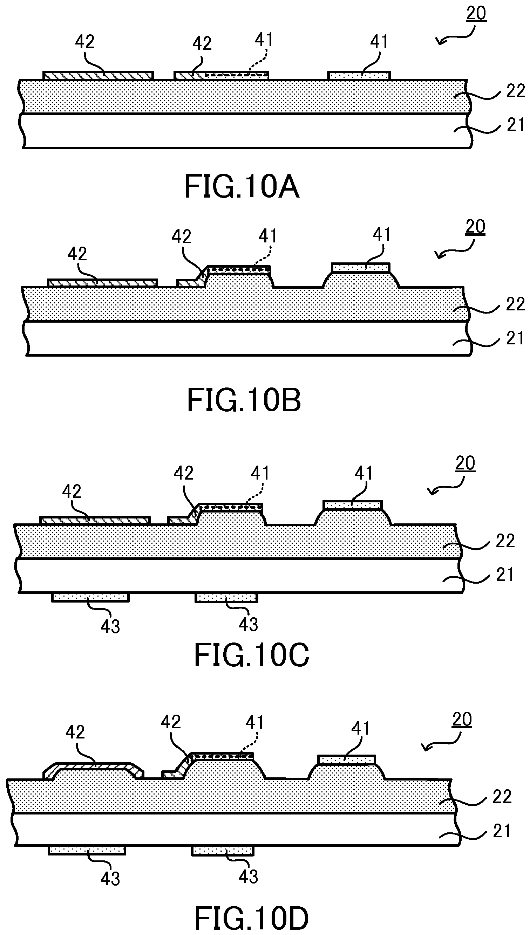

Next, processing is described to form the shaped object on the thermally-expandable sheet 20 by the shaped object manufacturing system 50 with reference to the flowchart illustrated in FIG. 9, and the cross-sectional views of the thermally-expandable sheet 20 illustrated in FIGS. 10A to 10D. In present another embodiment, as illustrated in FIG. 6, the color ink for printing the color image and the ink 10 for forming the photothermal conversion layer are set in the printing unit 52. The printing unit 52 prints the front side conversion layer 41 using the ink 10 on the basis of the front side foaming data that is data indicating portions for causing foaming and expansion in the front face of the thermally-expandable sheet 20. In the same manner, the ink 10 is used to print the back face photothermal conversion layer 43 on the basis of the back face foaming data that is data indicating the portion where foaming and expansion are caused on the back surface of the thermally-expandable sheet 20.

Firstly, the user prepares a thermally-expandable sheet 20 on which a shaped object is to be formed, and designates the color image data, the front face foaming data, and the back face foaming data using the display unit 54. Then the user inserts the thermally-expandable sheet 20 into the printing unit 52 with the front face facing upward. Next, the printing unit 52 prints the front side conversion layer (the front side photothermal conversion layer) 41 and the color image (the color ink layer 42) on the front face of the inserted thermally-expandable sheet 20 (step S21). Specifically, the printing unit 52 discharges, on the front face of the thermally-expandable sheet 20, the ink 10 of the present embodiment in accordance with the designated front face foaming data and the various cyan (C), magenta (M), and yellow (Y) inks in accordance with the designated color image data. As a result, the front side conversion layer 41 and the color ink layer 42 are formed on the thermal expansion layer 22, as illustrated in FIG. 10A. Due to simultaneous formation of the front side conversion layer 41 and the color ink layer 42, in FIG. 10A or the like the front side conversion layer 41 is illustrated using a dashed line.

Secondly, the user inserts the thermally-expandable sheet 20 having the front side conversion layer 41 and the color ink layer 42 printed thereon into the expansion unit 53 with the front face facing upward. The expansion unit 53 heats the inserted thermally-expandable sheet 20 from the front face (step S22). Specifically, the irradiating unit of the expansion unit 53 irradiates the front face of the thermally-expandable sheet 20 with light. The front side conversion layer 41 printed on the front face of the thermally-expandable sheet 20 absorbs the light of the irradiation, thereby generating heat. As a result, as illustrated in FIG. 10B, the region of the thermally-expandable sheet 20 having the front side conversion layer 41 printed thereon bulges and swells.

Thirdly, the user inserts the thermally-expandable sheet 20 into the printing unit 52 with the back face facing upward. The printing unit 52 prints the back side photothermal conversion layer (the back side photothermal conversion layer 43) on the back face of the inserted thermally-expandable sheet 20 (step S23). The printing unit 52 discharges the ink 10 onto the back face of the thermally-expandable sheet 20 in accordance with the designated back face foaming data. As a result, the back side photothermal conversion layer 43 is formed on the back face of the base material 21, as illustrated in FIG. 10C.

Fourthly, the user inserts the thermally-expandable sheet 20 having printed thereon the back side conversion layer 43 into the expansion unit 53 with the back face facing upward. The expansion unit 53 heats the inserted thermally-expandable sheet 20 from the back face (step S24). Specifically, the irradiating unit (not illustrated in the drawings) of the expansion unit 53 irradiates the back face of the thermally-expandable sheet 20 with light. As a result, as illustrated in FIG. 10D, the region of the thermally-expandable sheet 20 where the back side conversion layer 43 is printed bulges and swells.

The shaped object is formed in the thermally-expandable sheet 20 as a result of carrying out the procedures described above. Since the color of the ink 10 of the present embodiment is particularly suppressed, the influence of the ink 10 included in the front side conversion layer 41 on the color of the color ink layer 42 can be suppressed. Accordingly, the front side conversion layer 41 and the color ink layer 42 can be formed in a single step, thereby simultaneously forming the front side conversion layer 41 and the color ink layer 42, as depicted in step S21 of the present embodiment.

This process order illustrated in FIG. 9 is not limiting, and the back side conversion layer may be formed first. Specifically, in terms of the flowchart illustrated in FIG. 9, step S23 and step S24 are executed, and then steps S21 and S22 are executed.

Additionally, instead of executing the front side swelling step immediately after the front side conversion layer forming step, another step such as the color printing step can be interposed between the front side conversion layer forming step and the front side swelling step. In this case, an order is possible in which steps S1 and S3 of FIG. 7 are executed, and then after all of the steps of printing on the front side of the thermally-expandable sheet are completed, the front side swelling step is executed. In this case, step S1 of the flowchart illustrated in FIG. 7 is executed and the front side conversion layer is formed, and then step S3 is executed and the color image is printed. Thereafter, step S2 is executed and the thermal expansion layer is made to swell. Subsequently, step S4 and step S5 of FIG. 7 are executed, and the back side photothermal conversion layer is formed and the thermal expansion layer is made to swell. In this example, the back side conversion layer forming step first can be executed first. In this case, step S4 and step S5 are executed, and then steps S1, S3, and S2 are sequentially executed. The color printing step may be performed between the back side conversion layer forming step and the back side swelling step. In this case, steps S5, S3 and S4 are sequentially executed, then steps S1 and S2 are executed, or alternatively, steps S1 and S2 are executed, then steps S4 and S3 are executed.

The front side conversion layer forming step and the back side conversion layer forming step can be performed prior to the front side conversion layer forming step, the color printing step, and the back side swelling step. In this case, in terms of the flowchart illustrated in FIG. 7, step S1, step S3, and step S4 are executed first, and then step S2 and step S5 are executed. Moreover, the order in which step S1, step S3, and step S4 are executed is not limited to this order, and these steps may be arranged in any order. Moreover, step S2 and step S5 may be performed in this order, or may be performed in the reverse order.

The front side conversion layer forming step and the back side conversion layer forming step can be performed first, and then the front side swelling step and the back side swelling step can be performed, followed by the color printing step. In this case, in terms of the flowchart illustrated in FIG. 7 for example, step S1 and step S4 are executed in order, or step 4 and step S1 are executed in order. Thereafter, the thermal expansion layer is expanded by performing step S2 and step S5 in order, or by performing step S5 and step S2 in order. Thereafter, step S3 is performed, and the color image is printed. Further, the color printing step may be performed between the front side swelling step and the back side swelling step. In this case after execution of step S1 and step S4, one of the step S2 or step S5 is performed, then step S3 is executed, and thereafter the other of step S2 or step S5 is performed.

Another Embodiment

Although in the aforementioned embodiments an example is described of a UV-curable ink as the ink 10, the ink 10 may be a non-water-based ink (oil-based ink, solvent-based ink). In this case, in addition to the inorganic infrared absorbing agent, an organic solvent, a resin, or the like are further included. Cited organic solvents include: methyl alcohol, ethyl alcohol, or the like alcohols; acetone, methyl ethyl ketone, methyl isobutyl ketone, or the like ketones; methyl acetate, ethyl acetate, butyl acetate, or the like esters; ethylene glycol, diethylene glycol, or the like glycols; and ethylene glycol monomethyl ether, glycol ethers, glycol acetates, saturated hydrocarbons, unsaturated hydrocarbons, or the like. Cited resins include: acrylic type resins, styrene-acrylic type resins, styrene-maleic acid type resins, rosin-based resins, epoxy type resins, silicone type resins, butyral resins, maleic acid resins, phenol resins, urethane resins, melamine resins, or the like. Known additives other than the aforementioned example additives may be used, and such known additives may be included in the ink 10.

In the description of the aforementioned embodiments, although an example is cited in which the ink is loaded into a cartridge set in an inkjet type printer, this example is not limiting. The ink of the present embodiment can be used in another type of printing (printing apparatus) such as an apparatus for screen printing, gravure printing, offset printing, flexographic printing, or the like. Further, the printing steps illustrated in FIG. 7 (steps S1, S3, and S5) are not necessarily printing by the same printing method, and the aforementioned printing methods can be freely combined.

The ink 10 may be any of the water-based ink, the oil-based ink, and the ultraviolet-curable ink in accordance with the printing method. In this case, the ink 10 includes materials in accordance with the respective printing method, such as, for example, solvents, resins for film formation, auxiliary agents, or the like. Such materials may be as listed above, or other known materials may be used.

When the ink 10 is the water-based ink, the ink includes the inorganic infrared absorbing agent and also water, an aqueous organic solvent, and a resin. Cited examples of the aqueous organic solvent, without particular limitation, are: polyethylene glycol, polypropylene glycol, or the like polyalkylene glycols; ethylene glycol, triethylene glycol, or the like alkylene glycols; glycerin, glycerols, triethylene glycol monobutyl ether, ethylene glycol methyl(ethyl) ether, diethylene glycol methyl(ethyl) ether, or the like polyalcohol lower-alkyl ethers; and N-methyl-2-pyrolidone, 1,3-dimethyl-2-imidazolidinone, ethanol, or isopropanol. Cited examples of the resin are: acrylic type resins, styrene-acrylic type resins, styrene-maleic acid type reins, rosin type resins, epoxy type resins, silicone type resins, butyral type resins, maleic acid resins, phenol resins urethane resins, melamine resins, or the like. The ink 10 may further include additives. In addition to these cited additives, any known material may be used as an additive.

If the ink 10 is the ultraviolet-curable ink, the ink 10 includes the inorganic infrared absorbing agent and further includes an ultraviolet-curable resin (ultraviolet-curable monomer, ultraviolet-curable oligomer) and a polymerization initiator. Cited ultraviolet-curable monomers include: isobornyl acrylate, phenoxyethyl acrylate, or the like mono-functional monomers; trimethylolpropane triacetate, propylene glycol diacrylate, or the like poly-functional monomers; or the like. Cited ultraviolet-curable oligomers include: polyester acrylates, polyether acrylates, epoxy acrylates, urethane acrylates, or the like. Urethane acrylate oligomers are preferably used. A photo-cleavage type initiator or a hydrogen-abstraction type initiator can be used as the polymerization initiator, and a combination of multiple types of photo-polymerization initiator can be used. Acyl phosphine oxide compounds, acetophenone compounds, or the like are cited as the photo-cleavage type initiator; and benzophenone compounds, thioxanthone compounds, or the like are cited as the hydrogen-abstraction type initiator. In addition to these initiators, any known initiator can be used. Moreover, the ink 10 may further include solvents and additives.

The ink 10 may be a non-water-based (oil-based, solvent-based) ink. In this case, the ink 10 includes, in addition to the inorganic infrared absorbing agent, an organic solvent, resin, or the like. Cited organic solvents are: methyl alcohol, ethyl alcohol, or the like alcohols; acetone, methyl ethyl ketone, methyl isobutyl ketone, or the like ketones; methyl acetate, ethyl acetate, or the like esters; ethylene glycol, diethylene glycol, or the like glycols; and ethylene glycol monomethyl ether, glycol ethers, glycol acetates, saturated hydrocarbons, unsaturated hydrocarbons, or the like. Cited resins are: acrylic type resins, styrene-acrylic type resins, styrene-maleic acid type resins, rosin-based resins, epoxy type resins, silicone type resins, butyral resins, maleic acid resins, phenol resins, urethane resins, melamine resins, or the like. Known additives other than the aforementioned example additives may be used, and such additives may be included in the ink 10.

Also in the case in which the ink 10 is used in the offset printing apparatus or the like, the resin included in the ink 10 preferably has rubber elasticity. In the case of the ultraviolet-curable type ink, urethane acrylates are cited as this type of resin, without particular limitation.

In addition, for example, in the case in which the offset printing apparatus is used, as illustrated in FIGS. 9 and 10, the color printing step and the front side conversion layer forming step are combined, and the color ink layer and the front side conversion layer are printed in a single step, the offset printing apparatus is equipped with inks for printing the color image such as CMYK and the ink 10 of the present embodiment, and the color ink layer and the front side conversion layer are printed in order using these inks. In this case, the printing using the ink 10 can be performed first. The order of printing using the CMYK color ink is freely selected. Printing in this manner similarly may be performed for printing apparatuses other than the offset printing apparatus.

Example 1

In order to demonstrate that ink (base of the ink 10) that is white in a state that does not include the inorganic infrared absorbing agent masks the color of the sheet serving as the substrate, a white UV-curable inkjet printer ink not including coloring agent or the like was used as an example of the base of the ink, and printing was performed on a black sheet. Printing was performed multiple times at the same density. Further, the multiple printings were performed so as to overlap the locations of prior printing. The Lab values and black densities of the ink layer in this case are listed in Table 1. The Lab values and black densities were measured using an eXact reflection spectral densitometer (manufactured by Sakata INX ENG. Co., Ltd.). The Lab values and black densities indicated for a printing count of zero correspond to the color of the sheet. As listed in Table 1, the black density declined below 0.04 at two printings using the white ink, and the black density reached zero at four printings. In this manner, the color of the substrate was masked by the white ink with each instance of overlapped printing, and the color of the sheet serving as the substrate could not be visually discerned.

Table 1

|  | Number of applications | | | |
|---|---|---|---|---|
|  | 0 | 2 | 4 | 6 |
| L | 20.04 | 92.68 | 95.35 | 96.52 |
| a | 0.33 | -3.2 | -2.32 | -1.92 |
| b | 1.16 | -2.1 | 0.47 | 2.12 |
| black density | 2.04 | 0.04 | 0 | 0 |

Example 2

Next, in Example 2, cesium tungsten oxide was mixed with a white UV-curing offset ink including urethane acrylate as a UV-curable resin to prepare an ink for Example 2. The cesium tungsten oxide is added to the ink at a concentration of 10 wt.%. An offset printer using this ink was used to print a photothermal conversion layer on a thermally-expandable sheet (500 $\mu$m thickness). Density of printing the photothermal conversion layer was set to the range of 0% to 100% in 10% increments. Printing of the ink was overlapped two or three times. Prior to causing expansion of the thermal expansion layer, the color (Lab values) of each of the photothermal conversion layers was measured using an eXact reflection spectral densitometer (manufactured by Sakata INX ENG. Co., Ltd.). Further, a halogen lamp (1,000 W, 2,500K) was moved at a speed of 20 mm/s over the thermally-expandable sheet. The photothermal conversion layer was thus irradiated with electromagnetic radiation, and the thermal expansion layer was expanded. Thereafter, the colors (Lab values) of the photothermal conversion layer on the thermally-expandable sheet were measured using an eXact reflection spectral densitometer (manufactured by Sakata INX ENG. Co., Ltd.).

The Lab values of the photothermal conversion layer formed by printing two times and prior to expansion of the thermal expansion layer are listed in Table 2. Further, $\Delta E$ listed in Table 2 is calculated using the aforementioned Equation 1 from the Lab values of the region of 0% density. Since the ink is not present in the 0% density region, the Lab values of the 0% density region correspond to the Lab values of the surface of the thermally-expandable sheet. Further, black density, and the Hunter whiteness calculated from the Lab values using the below indicated Equation 2, are listed in Table 2.

$$\text{Hunter whiteness} = 100 - [(100 - L)^2 + a^2 + b^2]^{1/2} \quad \ldots \quad \text{(Equation 2)}$$

Table 2

| % | L | a | b | $\Delta E$ | Blackness | Whiteness |
|---|---|---|---|---|---|---|
| 100 | 91.95 | -3.7 | 0.65 | 4.1 | 0.04 | 91.12 |
| 90 | 92.41 | -3.43 | 1.04 | 3.6 | 0.03 | 91.61 |
| 80 | 93.16 | -3 | 1.27 | 2.8 | 0.02 | 92.42 |
| 70 | 93.69 | -2.54 | 1.43 | 2.1 | 0.02 | 93.05 |
| 60 | 92.79 | -1.71 | 1.82 | 2.1 | 0.03 | 92.37 |
| 50 | 93.61 | -2.14 | 1.52 | 1.8 | 0.02 | 93.09 |
| 40 | 94.43 | -1.32 | 1.84 | 1.4 | 0.02 | 93.05 |
| 30 | 94.01 | -1.01 | 1.75 | 0.7 | 0.01 | 93.68 |
| 20 | 94.31 | -0.85 | 1.6 | 0.4 | 0 | 94.03 |
| 10 | 94.3 | -0.71 | 1.58 | 0.3 | 0 | 94.04 |
| 0 | 94.55 | -0.6 | 1.43 | 0.0 | 0 | 94.33 |

Next, Lab values of the photothermal conversion layer formed by printing two times and then expanding the thermal expansion layer are illustrated in Table 3. Further, $\Delta E$ listed in Table 3 was also calculated using the aforementioned Equation 1 from the Lab values of the region of 0% density. Further, black density, and the Hunter whiteness calculated from the Lab values using the above indicated Equation 2, are listed in Table 3.

Table 3

| % | L | a | b | $\Delta E$ | Blackness | Whiteness |
|---|---|---|---|---|---|---|
| 100 | 91.94 | -3.65 | 0.71 | 4.2 | 0.04 | 91.12 |
| 90 | 92.49 | -3.4 | 1.05 | 3.6 | 0.03 | 91.69 |
| 80 | 93.31 | -2.94 | 1.33 | 2.7 | 0.02 | 92.57 |
| 70 | 93.58 | -2.53 | 1.52 | 2.2 | 0.02 | 93.93 |
| 60 | 92.92 | -1.68 | 1.87 | 2.1 | 0.02 | 92.49 |
| 50 | 93.88 | -2.12 | 1.57 | 1.7 | 0.01 | 93.34 |
| 40 | 93.17 | -1.28 | 1.91 | 1.7 | 0.02 | 92.79 |
| 30 | 94 | -1.03 | 1.84 | 0.9 | 0.01 | 93.64 |
| 20 | 94.32 | -0.79 | 1.67 | 0.4 | 0 | 94.03 |
| 10 | 94.42 | -0.68 | 1.65 | 0.3 | 0 | 94.14 |
| 0 | 94.66 | -0.57 | 1.49 | 0.0 | 0 | 94.43 |

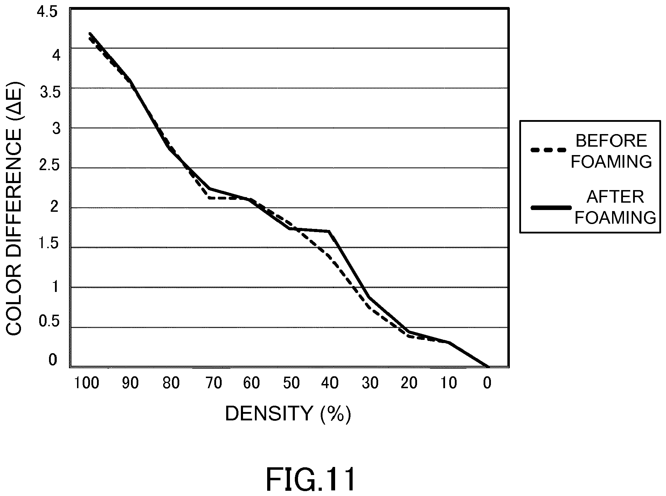

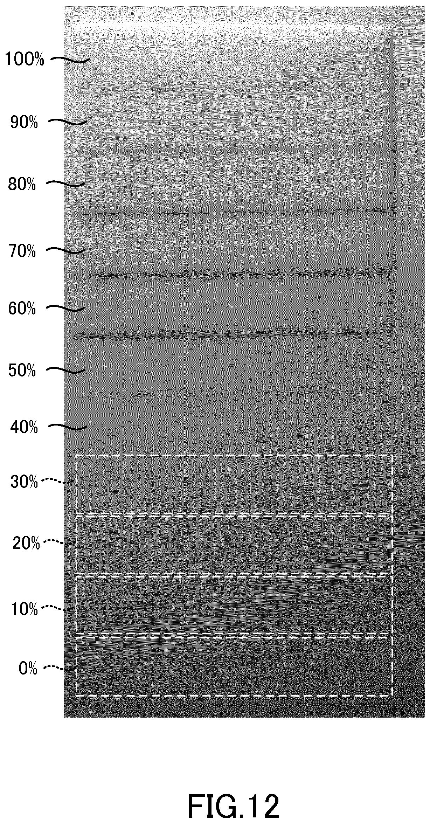

Further, FIG. 11 is a graph illustrating the $\Delta E$ values listed in Tables 2 and 3. In FIG. 11, the $\Delta E$ value is illustrated at each printing density before and after expansion of the thermal expansion layer. Moreover, FIG. 12 is an image of the thermally-expandable sheet after expansion of the thermal expansion layer. As seen in FIG. 12, good foaming was seen in the range of 40% to 100% density. Moreover, at a density less than or equal to 30%, although ink was applied in the region enclosed by the dashed line illustrated in FIG. 12, foaming was not seen. Further, $\Delta E$ of the 40% to 100% densities in which foaming was seen were the 1.4 to 4.1 prior to foaming, and were the 1.7 to 4.2 after foaming. Thus in the density range of 40% to 100%, a photothermal conversion layer could be formed for which $\Delta E$ was less than or equal to 3.2, and further, expansion of the thermal expansion layer could be caused using the photothermal conversion layer having $\Delta E$ less than or equal to 3.2. Moreover, the range of black density was less than or equal to 0.02, and from the Hunter whiteness, whiteness is understood have been high.

Next, Lab values of a photothermal conversion layer formed by printing three times and prior to expanding the thermal expansion layer are listed in Table 4. Further, $\Delta E$ listed in Table 4 is also calculated using the aforementioned Equation 1 from the Lab values of the region of 0% density. Further, black density, and the Hunter whiteness calculated from the Lab values using the above indicated Equation 2, are listed in Table 4.

Table 4

| % | L | a | b | $\Delta E$ | Blackness | Whiteness |
|---|---|---|---|---|---|---|
| 100 | 89.9 | -4.49 | 0.92 | 6.1 | 0.07 | 88.91 |
| 90 | 90.89 | -4.21 | 1.42 | 5.1 | 0.06 | 89.86 |
| 80 | 91.63 | -3.84 | 1.64 | 4.3 | 0.05 | 90.65 |
| 70 | 92.36 | -3.44 | 1.82 | 3.6 | 0.04 | 91.43 |
| 60 | 93.11 | -2.94 | 1.88 | 2.8 | 0.03 | 92.28 |
| 50 | 92.5 | -1.73 | 2.18 | 2.4 | 0.03 | 92.00 |
| 40 | 93.63 | -2.29 | 2 | 2.0 | 0.02 | 92.94 |
| 30 | 93.24 | -1.32 | 2.07 | 1.6 | 0.02 | 92.81 |
| 20 | 94 | -1.01 | 1.05 | 0.8 | 0.01 | 93.83 |
| 10 | 94.09 | -0.77 | 1.68 | 0.5 | 0.01 | 93.81 |
| 0 | 94.53 | -0.61 | 1.49 | 0.0 | 0 | 94.30 |

Lab values of a photothermal conversion layer formed by printing three times after expanding the thermal expansion layer are listed in Table 5. Further, $\Delta E$ listed in Table 5 is also calculated using the aforementioned Equation 1 from the Lab values of the region of 0% density. Further, black density, and the Hunter whiteness calculated from the Lab values using the above indicated Equation 2, are listed in Table 5.

Table 5

| % | L | a | b | $\Delta E$ | Blackness | Whiteness |
|---|---|---|---|---|---|---|
| 100 | 90.17 | -4.43 | 0.7 | 5.9 | 0.06 | 89.20 |
| 90 | 90.78 | -4.26 | 1.21 | 5.3 | 0.06 | 89.77 |
| 80 | 91.76 | -3.9 | 1.53 | 4.4 | 0.05 | 90.76 |
| 70 | 92.41 | -3.42 | 1.78 | 3.6 | 0.04 | 91.49 |
| 60 | 91.69 | -1.69 | 2.2 | 3.2 | 0.04 | 91.24 |
| 50 | 93.24 | -2.91 | 1.85 | 2.7 | 0.03 | 92.41 |
| 40 | 92.63 | -1.34 | 2.14 | 2.2 | 0.03 | 92.21 |
| 30 | 93.58 | -2.27 | 2.02 | 2.0 | 0.02 | 92.90 |
| 20 | 94 | -0.91 | 1.91 | 0.8 | 0.01 | 93.64 |
| 10 | 94.22 | -0.78 | 1.7 | 0.5 | 0.01 | 93.92 |
| 0 | 94.62 | -0.6 | 1.5 | 0.0 | 0 | 94.38 |

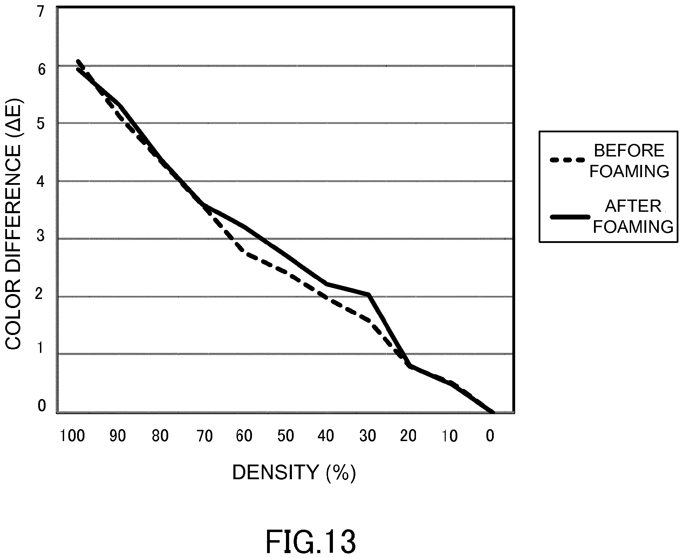

Further, FIG. 13 is a graph illustrating the $\Delta E$ values listed in Tables 4 and 5. In FIG. 13, the $\Delta E$ value is illustrated at each printing density before and after expansion of the thermal expansion layer. Good foaming in the photoconversion layer formed by three printings was seen in the range of 40% to 100% density. Particularly good foaming was obtained at 40% density for which foaming was low for two printings. Further, under test conditions, slight foaming was seen at 30% density. Further, ΔE of the 40% to 100% densities in which foaming good was seen was 2.0 to 6.1 prior to expansion, and was 2.2 to 5.9 after expansion. ΔE became less than or equal to 3.2 when the density was less than or equal to 60%. Thus in the density range of 40% to 60%, a photothermal conversion layer can be formed for which ΔE is less than or equal to 3.2, and moreover, the thermal expansion layer can be expanded by the photoconversion layer having ΔE less than or equal to 3.2. Further, black density is less than or equal to 0.04, and from the Hunter whiteness, whiteness is understood to be high.

Example 3

Next, the ink according to Example 2 was used, and an example was demonstrated of forming the photothermal conversion layer on a thermally-expandable sheet (400 μm thickness) on which the thermal expansion layer was formed thinly in comparison to the thermally-expandable sheet used in Example 2. The density of printing the photothermal conversion layer was set to 0% to 100% in 10% increments. The ink was printed once using an offset printer. Prior to causing expansion of the thermal expansion layer, the color (Lab values) of each of the photothermal conversion layers was measured using an eXact reflection spectral densitometer (manufactured by Sakata INX ENG. Co., Ltd.). Further, a halogen lamp (1,000 W, 2,500K) was moved at a speed of 18 mm/s over the thermally-expandable sheet. The photothermal conversion layer was thus irradiated with electromagnetic radiation, and the thermal expansion layer was expanded. Thereafter, the colors (Lab values) of the photothermal conversion layer on the thermally-expandable sheet were measured using an eXact reflection spectral densitometer (manufactured by Sakata INX ENG. Co., Ltd.).

The Lab values of the photothermal conversion layer prior to expansion of the thermal expansion layer are listed in Table 6. The Lab values of the photothermal conversion layer after expansion of the thermal expansion layer are listed in Table 7. Further, the ΔE listed in Tables 6 and 7 is calculated using the aforementioned Equation 1 from the Lab values of the region of 0% density. Further, the Hunter whiteness calculated from the Lab values using the below indicated Equation 2 is listed in Tables 6 and 7.

Table 6

| % | L | a | b | ΔE | Whiteness |
|---|---|---|---|----|-----------|
| 100 | 89.63 | -2.03 | 2.18 | 2.2 | 89.21 |
| 90 | 89.77 | -1.87 | 2.38 | 1.9 | 89.33 |
| 80 | 89.94 | -1.84 | 2.4 | 1.8 | 89.50 |
| 70 | 90.05 | -1.69 | 2.67 | 1.5 | 89.56 |
| 60 | 90.1 | -1.52 | 3.17 | 1.2 | 89.49 |
| 50 | 90.36 | -1.29 | 3.48 | 0.8 | 89.67 |
| 40 | 90.57 | -1.12 | 3.65 | 0.6 | 89.83 |
| 30 | 90.49 | -1 | 3.68 | 0.6 | 89.75 |
| 20 | 90.72 | -0.86 | 3.59 | 0.3 | 90.01 |
| 10 | 90.8 | -0.78 | 3.63 | 0.3 | 90.08 |
| 0 | 90.97 | -0.79 | 3.41 | 0.0 | 90.32 |

Table 7

| % | L | a | b | ΔE | Whiteness |
|---|---|---|---|----|-----------|
| 100 | 93.08 | -1.27 | 1.8 | 2.6 | 92.74 |
| 90 | 92.56 | -1.17 | 2.08 | 2.1 | 92.19 |
| 80 | 92.93 | -1.11 | 2.1 | 2.3 | 92.54 |
| 70 | 93.11 | -1.01 | 2.21 | 2.4 | 92.69 |
| 60 | 92.78 | -0.91 | 2.51 | 1.9 | 92.30 |

(continued)

| % | L | a | b | ΔE | Whiteness |
|---|---|---|---|---|---|
| 50 | 91.1 | -0.87 | 3.32 | 0.3 | 90.46 |
| 40 | 90.88 | -0.81 | 3.68 | 0.4 | 90.13 |
| 30 | 91.03 | -0.74 | 3.77 | 0.3 | 90.24 |
| 20 | 91.15 | -0.7 | 3.69 | 0.2 | 90.39 |
| 10 | 91.51 | -0.66 | 3.62 | 0.4 | 90.75 |
| 0 | 91.18 | -0.63 | 3.5 | 0.0 | 90.49 |

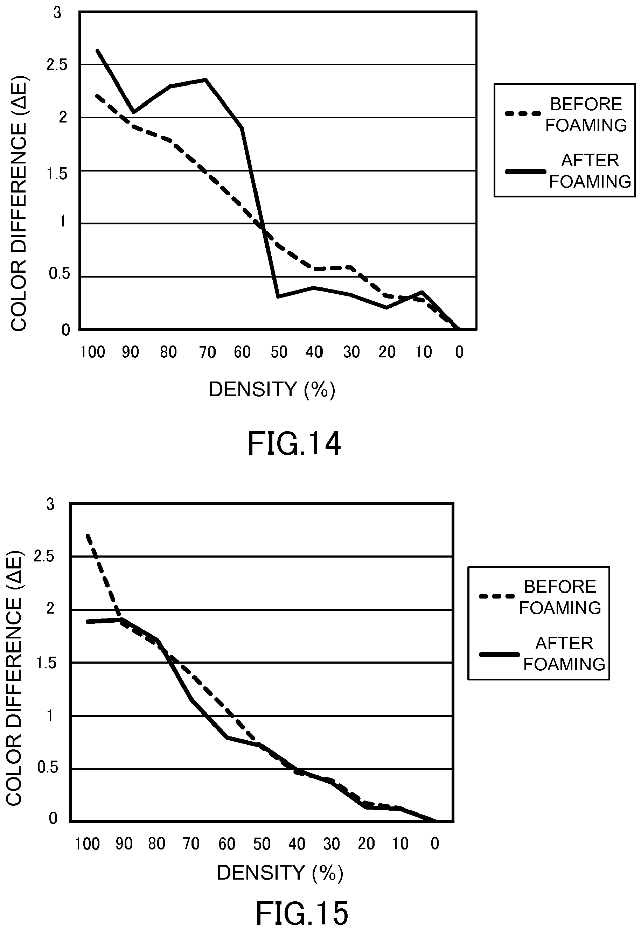

Further, FIG. 14 is a graph illustrating the ΔE values listed in Tables 6 and 7. In FIG. 14, the ΔE value is illustrated at each printing density before and after expansion of the thermal expansion layer. Although the printing count was one in Example 3 in order to form the thermal expansion layer thinly, foaming could be caused even when the print density was low in comparison to the print densities of Examples 2 and 3. Good foaming was seen when the density was 30% to 100%. Slight foaming was seen when the density was 20%. ΔE values of the 30% to 100% densities in which foaming good was seen were 0.6 to 2.2 prior to expansion, and were 0.3 to 2.6 after expansion. In Example 3, ΔE value could be less than or equal to 3.2 for all densities of 30% to 100% for which foaming was good. Thus in the density range of 30% to 100%, a photothermal conversion layer could be formed for which ΔE was less than or equal to 3.2, and moreover, the thermal expansion layer could be expanded by the photoconversion layer having ΔE less than or equal to 3.2.

Example 4

Next, the ink according to Example 2 was used, and an example was demonstrated of forming the photothermal conversion layer on the thermally-expandable sheet used in Example 2 and on a thermally-expandable sheet (500 μm thickness) for which the thermal expansion material and the binder material were different. The density of printing the photothermal conversion layer was set to 0% to 100% in 10% increments. The ink was printed once using an offset printer. Further, a halogen lamp (1,000 W, 2,500K) was moved at a speed of 18 mm/s over the thermally-expandable sheet. The photothermal conversion layer was thus irradiated with electromagnetic radiation, and the thermal expansion layer was expanded. The colors (Lab values) of the photothermal conversion layer were measured, both before and after expansion of the thermal expansion layer in the same manner as in the aforementioned Example 2, using an eXact reflection spectral densitometer (manufactured by Sakata INX ENG. Co., Ltd.).

Lab values of the photothermal conversion layer before expansion of the thermal expansion layer are listed in Table 8. Lab values of the photothermal conversion layer after expansion of the thermal expansion layer are listed in Table 9. ΔE values listed in Tables 8 and 9 are calculated using the aforementioned Equation 1 from the Lab values of the region of 0% density. Further, the Hunter whiteness calculated from the Lab values using the above indicated Equation 2 are listed in Tables 8 and 9.

Table 8

| % | L | a | b | ΔE | Whiteness |
|---|---|---|---|---|---|
| 100 | 91.21 | -0.37 | 3.43 | 2.7 | 90.56 |
| 90 | 92.19 | -0.28 | 3.49 | 1.9 | 91.44 |
| 80 | 92.28 | -0.15 | 3.65 | 1.7 | 91.46 |
| 70 | 92.39 | 0.1 | 3.84 | 1.4 | 91.48 |
| 60 | 92.71 | 0.23 | 3.88 | 1.1 | 91.74 |
| 50 | 92.96 | 0.44 | 4.01 | 0.7 | 91.89 |
| 40 | 93.18 | 0.57 | 4.01 | 0.5 | 92.07 |
| 30 | 93.14 | 0.68 | 4.13 | 0.4 | 91.96 |
| 20 | 93.41 | 0.76 | 4.09 | 0.2 | 92.21 |
| 10 | 93.48 | 0.8 | 4.1 | 0.1 | 92.26 |

(continued)

| % | L | a | b | ΔE | Whiteness |
|---|---|---|---|---|---|
| 0 | 93.47 | 0.89 | 4.19 | 0.0 | 92.19 |

Table 9

| % | L | a | b | ΔE | Whiteness |
|---|---|---|---|---|---|
| 100 | 94.38 | -0.71 | 3.74 | 1.9 | 93.21 |
| 90 | 94.67 | -0.53 | 3.78 | 1.9 | 93.44 |
| 80 | 94.57 | -0.4 | 3.95 | 1.7 | 93.27 |
| 70 | 93.96 | -0.15 | 4.25 | 1.1 | 92.61 |
| 60 | 93.19 | 0.13 | 4.38 | 0.8 | 91.90 |
| 50 | 92.88 | 0.42 | 4.31 | 0.7 | 91.67 |
| 40 | 93.03 | 0.58 | 4.25 | 0.5 | 91.82 |
| 30 | 93.12 | 0.68 | 4.28 | 0.4 | 91.87 |
| 20 | 93.34 | 0.77 | 4.23 | 0.1 | 92.07 |
| 10 | 93.36 | 0.86 | 4.28 | 0.1 | 92.05 |
| 0 | 93.43 | 0.86 | 4.18 | 0.0 | 92.17 |

Further, FIG. 15 is a graph illustrating the ΔE values listed in Tables 8 and 9. In FIG. 15, the ΔE value is illustrated at each printing density before and after expansion of the thermal expansion layer. In Example 4, foaming was seen in the density range of 50% to 100%. ΔE values of the 50% to 100% densities at which foaming was seen were 0.7 to 2.7 prior to foaming, and were 0.7 to 1.9 after foaming. Thus a photothermal conversion layer could be formed for which ΔE was less than or equal to 3.2, and moreover, the thermal expansion layer could be expanded by the photothermal conversion layer having ΔE less than or equal to 3.2. Although the sheet used in Example 4 had a yellowish tint, ΔE was less than or equal to 3.2 even when using such a colored sheet, and photothermal conversion was enabled. Thus in the density range of 50% to 100%, a photothermal conversion layer could be formed for which ΔE was less than or equal to 3.2, and moreover, the thermal expansion layer could be expanded by the photothermal conversion layer having ΔE less than or equal to 3.2.

Thus the ink 10 of the present embodiment can form a white transparent photothermal conversion layer for which color is suppressed.

The present disclosure is not limited to the aforementioned embodiments, and various types of modifications and applications are possible.

The photothermal conversion layer of the present embodiment may also be formed on the back face of the thermally-expandable sheet. In this case, the color difference between the photothermal conversion layer and the thermally-expandable sheet is calculated, in the same manner as in FIG. 1, between the photothermal conversion layer and the back face thermally-expandable sheet. Further, in cases such as when the back face of the thermally-expandable sheet is difficult to visually discern, and when the back face photothermal conversion layer having a color is not a problem, ΔE of the back face photothermal conversion layer may be larger than 3.2. Further, the photothermal conversion layer of the present embodiment is formed on the front face and/or back face of the thermally-expandable sheet.

In the present embodiment, a shaped object manufacturing system 50 example is cited, as a printing apparatus that is equipped with a control unit 51, an expansion unit 53, or the like, although this example is not limiting, and the printing apparatus may be configured to include just the inkjet type printing unit 52 as illustrated in FIG. 5.

Further, although the aforementioned embodiment cites an example of a configuration that prints the photothermal conversion layer by heating a specific region of the thermally-expandable sheet, as long as ink is used for heating a specific region, use is possible for articles other than the thermally-expandable sheet.

Although in the aforementioned embodiments examples are cited of a configuration that forms the photothermal conversion layer on the front face and the back face of the thermally-expandable sheet, this configuration is not limiting. In all aspects of the present disclosure, the photothermal conversion layer can be formed on the front face alone or on the back face alone.

Further, in the drawings, each of the layers of the thermally-expandable sheet, the photothermal conversion layers (front face and back face), and the color ink layers are all illustrated in an exaggerated manner as required for description. Thus the illustrations of shapes, thicknesses, colors, or the like of such layers are not intended to be limiting.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

**Claims**

1. An ink (10) for forming a photothermal conversion layer (41, 43) used for causing expansion of at least a portion of a thermal expansion layer (22) of a thermally-expandable sheet (20), the ink (10) comprising:

   an inorganic infrared absorbing agent having a higher absorptivity in at least one region of an infrared light spectrum than in a visible light spectrum, wherein
   a base of the ink (10) is white.

2. The ink (10) according to claim 1, wherein
   at least one surface of the thermally-expandable sheet (20) on which the photothermal conversion layer (41, 43) is formed using the ink (10) is white,
   a color difference $\Delta E^*ab$ is less than or equal to 3.2, is calculated using $L^*a^*b^*$ color coordinates, and occurs between (i) the photothermal conversion layer (41, 43), and (ii) the at least one surface of the thermally-expandable sheet (20) on which the photothermal conversion layer (41, 43) is formed.

3. The ink (10) according to claim 2, wherein the inorganic infrared absorbing agent is cesium tungsten oxide or lanthanum hexaboride.

4. The ink (10) according to claim 3, wherein a content of the inorganic infrared absorbing agent is 0.10 to 20 wt.%.

5. The ink (10) according to claim 4, wherein
   the ink (10) is a UV-curable ink (10), and
   further comprises a UV-curable resin and a polymerization initiator.

6. The ink (10) according to claim 5, wherein the UV-curable resin is a UV-curable monomer or a UV-curable oligomer, and has rubber elasticity.

7. The ink (10) according to claim 4, wherein
   the ink (10) is an oil-based ink (10) or a solvent-based ink (10), and
   further comprises an organic solvent and a resin.

8. The ink (10) according to claim 4, wherein
   the ink (10) is a water-based ink (10), and
   further comprises water, an aqueous organic solvent, and a resin.

9. A manufacturing method for manufacturing a shaped object by using a photothermal conversion layer (41, 43) for causing expansion of at least a portion of a thermal expansion layer (22) of a thermally-expandable sheet (20), the manufacturing method comprising:

   forming the photothermal conversion layer (41, 43) using an ink (10) on at least one surface of the thermally-expandable sheet (20), the ink (10) comprising an inorganic infrared absorbing agent having a higher absorptivity in at least one region of an infrared light spectrum than in a visible light spectrum, a base of the ink (10) being white; and
   irradiating the photothermal conversion layer (41, 43) with light to cause expansion of the thermally-expandable sheet (20).

**10.** The manufacturing method according to claim 9, wherein
the at least one surface of the thermally-expandable sheet (20) on which the photothermal conversion layer (41, 43) is formed using the ink (10) is white, and
a color difference $\Delta E^*ab$ is less than or equal to 3.2, is calculated using $L^*a^*b^*$ color coordinates, and occurs between (i) the photothermal conversion layer (41, 43) and (ii) the at least one surface of the thermally-expandable sheet (20) on which the photothermal conversion layer (41, 43) is formed.

**11.** The manufacturing method according to claim 10, wherein the inorganic infrared absorbing agent is cesium tungsten oxide or lanthanum hexaboride.

**12.** The manufacturing method according to claim 9, wherein a content of the inorganic infrared absorbing agent is 0.10 to 20 wt.%.

**13.** A thermally-expandable sheet (20) comprising:

a thermal expansion layer (22) that distends due to heat; and
a photothermal conversion layer (41, 43) disposed on at least one surface of the thermally-expandable sheet (20), the photothermal conversion layer (41, 43) for causing the thermal expansion layer (22) to distend, wherein the photothermal conversion layer (41, 43) comprises an ink (10) comprising an inorganic infrared absorbing agent having a higher absorptivity in at least one region of an infrared light spectrum than in a visible light spectrum, a base of the ink (10) being white.

**14.** The thermally-expandable sheet (20) according to claim 13, wherein
the at least one surface of the thermally-expandable sheet (20) on which the photothermal conversion layer (41, 43) is disposed using the ink (10) is white,
a color difference $\Delta E^*ab$ is less than or equal to 3.2, is calculated using $L^*a^*b^*$ color coordinates, and occurs between (i) the photothermal conversion layer (41, 43), and (ii) the at least one surface of the thermally-expandable sheet (20) on which the photothermal conversion layer (41, 43) is disposed.

**15.** The thermally-expandable sheet (20) according to claim 14, wherein the inorganic infrared absorbing agent is cesium tungsten oxide or lanthanum hexaboride.

**16.** The thermally-expandable sheet (20) according to claim 15, wherein a content of the inorganic infrared absorbing agent is 0.10 to 20 wt.%.

FIG.1

FIG.2

FIG.3

REGION B | REGION A

25(10)

20

FIG.4

FIG.5A

FIG.5B

FIG.5C

FIG.6

```
         ┌─────────────────────┐
         │   SHAPED OBJECT      │
         │  MANUFACTURING       │
         │     PROCESS          │
         └─────────┬───────────┘
                   │            S1
         ┌─────────▼───────────┐
         │ PRINT PHOTOTHERMAL   │
         │  CONVERSION LAYER    │
         │  ON FRONT FACE OF    │
         │THERMALLY EXPANDABLE  │
         │       SHEET          │
         └─────────┬───────────┘
                   │            S2
         ┌─────────▼───────────┐
         │ IRRADIATE FRONT FACE │
         │         OF           │
         │THERMALLY EXPANDABLE  │
         │       SHEET          │
         └─────────┬───────────┘
                   │            S3
         ┌─────────▼───────────┐
         │ PRINT COLOR IMAGE ON │
         │  FRONT SIDE OF       │
         │THERMALLY EXPANDABLE  │
         │       SHEET          │
         └─────────┬───────────┘
                   │            S4
         ┌─────────▼───────────┐
         │ PRINT PHOTOTHERMAL   │
         │  CONVERSION LAYER    │
         │  ON BACK FACE OF     │
         │THERMALLY EXPANDABLE  │
         │       SHEET          │
         └─────────┬───────────┘
                   │            S5
         ┌─────────▼───────────┐
         │ IRRADIATE BACK FACE  │
         │         OF           │
         │THERMALLY EXPANDABLE  │
         │       SHEET          │
         └─────────┬───────────┘
                   │
         ┌─────────▼───────────┐
         │        END          │
         └─────────────────────┘
```

## FIG.7

FIG.8A

FIG.8B

FIG.8C

FIG.8D

FIG.8E

```
         ┌─────────────────────┐
         │   SHAPED OBJECT      │
         │   MANUFACTURING      │
         │     PROCESS          │
         └─────────────────────┘
                    │
                    ▼                        S21
  ┌──────────────────────────────────────────┐
  │ PRINT PHOTOTHERMAL CONVERSION  LAYER      │
  │ AND COLOR INK LAYER ON FRONT FACE OF      │
  │     THERMALLY EXPANDABLE SHEET            │
  └──────────────────────────────────────────┘
                    │
                    ▼                        S22
  ┌──────────────────────────────────────────┐
  │         IRRADIATE FRONT FACE OF           │
  │       THERMALLY EXPANDABLE SHEET          │
  └──────────────────────────────────────────┘
                    │
                    ▼                        S23
  ┌──────────────────────────────────────────┐
  │     PRINT PHOTOTHERMAL CONVERSION         │
  │        LAYER ON BACK FACE OF              │
  │       THERMALLY EXPANDABLE SHEET          │
  └──────────────────────────────────────────┘
                    │
                    ▼                        S24
  ┌──────────────────────────────────────────┐
  │         IRRADIATE BACK FACE OF            │
  │       THERMALLY EXPANDABLE SHEET          │
  └──────────────────────────────────────────┘
                    │
                    ▼
         ┌─────────────────────┐
         │        END          │
         └─────────────────────┘
```

FIG.9

FIG.10A

FIG.10B

FIG.10C

FIG.10D

FIG.11

FIG.12

FIG.13

FIG.14

FIG.15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6428660 B

- JP 2001150812 A